# EUROPEAN PATENT APPLICATION

(11) **EP 4 169 993 A1**
(43) Date of publication of application: **26.04.2023**
(21) Application number: 22199544.2
(22) Date of filing: 04.10.2022
(51) Int. Cl.: C09F 9/00, C09D 7/63, C09D 167/08

(54) **CURING ACCELERATOR FOR OXIDATIVE POLYMERIZATION TYPE UNSATURATED RESIN AND CURABLE RESIN COMPOSITION**

(30) Priority: 19.10.2021 JP 2021170791
(71) Applicant: DIC Corporation, Tokyo 174-8520 (JP)
(72) Inventor: UJIGAWA, Mari, Chiba, 290-8585 (JP); NAKANO, Hiroaki, Chiba, 290-8585 (JP)
(74) Representative: TBK

(57) **Abstract**

Provided is a curing accelerator for an oxidative polymerization type unsaturated resin having excellent drying performance and stability over time.

A curing accelerator for an oxidative polymerization type unsaturated resin contains a non-cobalt metallic soap, a diamine compound, an amino alcohol compound, and a fatty acid. The diamine compound is a diamine compound having a structure in which at least one is a primary amine and two nitrogen atoms are coupled to each other via two carbon atoms.

## Description

### BACKGROUND OF THE INVENTION

### 1. Field of the Invention

The present invention relates to a curing accelerator for an oxidative polymerization type unsaturated resin and a curable resin composition.

### 2. Description of the Related Art

In the field of using oxidative polymerization type resins such as printing inks and paints, a dryer is added as a curing accelerator to dry the resins. A common dryer used in the inks and paints is a metal salt of cobalt and a carboxylic acid (hereinafter, a metal salt of a metal and a carboxylic acid may be abbreviated as a "metallic soap").

While the cobalt metallic soap has excellent drying performance, the cobalt compound itself is a substance of carcinogenic concern listed as Group 2B, which is defined as "possibly carcinogenic to humans" on the list of carcinogenic risks of International Agency for Research on Cancer. In addition to this carcinogenic concern, cobalt metal is a rare metal with an unstable supply and high cost, and thus various non-cobalt metallic soaps, which do not use cobalt, have been developed (WO 2013/077267A1 and WO 2015/005121A1, for example).

### SUMMARY OF THE INVENTION

The non-cobalt metallic soap of 2013/077267A1 has a problem of insufficient drying performance, whereas the non-cobalt soap of WO 2015/005121A1 has a problem of poor stability over time.

An object of the present invention is to provide a curing accelerator for an oxidative polymerization type unsaturated resin having excellent drying performance and stability over time.

The inventors of the present invention have conducted earnest studies in order to achieve the above object to find out that a specific diamine compound, an amino alcohol compound, and a fatty acid are used together with a non-cobalt metallic soap to obtain excellent drying performance and stability over time and to complete the present invention.

Specifically, the present invention relates to a curing accelerator for an oxidative polymerization type unsaturated resin containing a non-cobalt metallic soap, a diamine compound, an amino alcohol compound, and a fatty acid, the diamine compound being a diamine compound having a structure in which at least one is a primary amine and two nitrogen atoms are coupled to each other via two carbon atoms.

The present invention can provide a curing accelerator for an oxidative polymerization type unsaturated resin having excellent drying performance and stability over time.

### DETAILED DESCRIPTION OF EMBODIMENTS

The following describes an embodiment of the present invention. The present invention is not limited to the following embodiment and can be performed with changes made as appropriate to the extent that the effect of the present invention is not impaired.

### Curing Accelerator for Oxidative Polymerization Type Unsaturated Resin

The curing accelerator for an oxidative polymerization type unsaturated resin of the present invention (hereinafter, may be referred to simply as the "curing accelerator of the present invention") contains a non-cobalt metallic soap, a diamine compound, an amino alcohol compound, and a fatty acid.

In the present invention, it is thought that the use of a specific diamine compound and an amino alcohol compound gives excellent drying performance and drying performance stability over time to the metallic soap and the use of a fatty acid further enhances the stability over time of the curing accelerator itself. That is, the "stability over time" in the present invention includes two meanings, producing the effect of causing no crystallization or the like in the curing accelerator itself over time and providing no reduction in the curing accelerating effect over time when added to an oxidative polymerization type unsaturated resin to form a composition.

The following describes the components of the curing accelerator of the present invention.

### Non-Cobalt Metallic Soap

The non-cobalt metallic soap is a metal salt represented by M(X)ₙ, for example:
where M is manganese, iron, bismuth, zirconium, barium, calcium, strontium, nickel, copper, zinc, cerium, or vanadium;
X is one or more selected from F⁻, Cl⁻, Br⁻, I⁻, PF₆⁻, SbF₆⁻, AsF₆⁻, BF₄⁻, B(C₆F₅)₄⁻, ClO₄⁻, ClO₃⁻, CO₂⁻, ClO⁻, H₂PO₄⁻, H₂PO₃⁻, H₂PO₂⁻, HCO₃⁻, NO₃⁻, NO₂⁻, (CH₃CO)₂CH⁻, RCOO⁻ (R is a C₁₋₂₂ hydrocarbon group), O²⁻, S²⁻, SO₄²⁻, SO₃²⁻, and CO₃²⁻; and
n is an integer of 1 or more.

The non-cobalt metallic soap is preferably a fatty acid metal salt of a C₁₋₂₂ fatty acid and more preferably a metal salt represented by General Formula (A) below:

[Chemical Formula 3] (R¹¹COO)ₙM **(A)**

in General Formula (A) above,
R¹¹ is a hydrogen atom or a C₁₋₂₁ alkyl group;
n is an integer in a range of 1 to 4; and
M is manganese, iron, bismuth, zirconium, barium, calcium, strontium, nickel, copper, zinc, cerium, or vanadium.

In General Formula (A) above, when n is an integer of 2 or more, a plurality of R¹¹ may be the same or different from each other.

The C₁₋₂₁ alkyl group as R¹¹ may be a straight-chain alkyl group, be a branched alkyl group, or contain an alicyclic structure.

The C₁₋₂₁ alkyl group as R¹¹ corresponds to a carboxylic acid residue obtained by removing a carboxy group (COOH) from a C₁₋₂₂ carboxylic acid represented by R¹¹COOH used in the production of fatty acid metal salts. Examples of the carboxylic acid residue include an acetic acid residue, a propionic acid residue, a butanoic acid residue, a pentanoic acid residue, an acrylic acid residue, a methacrylic acid residue, an octyl acid residue (a 2-ethylhexanoic acid residue), a neodecanoic acid residue, a naphthenic acid residue, an isononanoic acid residue, an eleostearic acid residue, a tall oil fatty acid residue, a coconut oil fatty acid residue, a soybean oil fatty acid residue, a linseed oil fatty acid residue, a safflower oil fatty acid residue, a dehydrated castor oil fatty acid residue, a tung oil fatty acid residue, a lauric acid residue, a myristic acid residue, a palmitic acid residue, a stearic acid residue, an isostearic acid residue, and an oleic acid residue.

The C₁₋₂₁ alkyl group as R¹¹ is preferably a C₁₋₁₅ alkyl group, more preferably a C₁₋₁₁ alkyl group, and even more preferably an acetic acid residue, a propionic acid residue, a butanoic acid residue, a pentanoic acid residue, a 2-ethylhexanoic acid residue, an isononanoic acid residue, a neodecanoic acid residue, or a naphthenic acid residue.

The letter n is a value corresponding to the ionic valence of the metal atom as M.

The non-cobalt metallic soap contained in the curing accelerator of the present invention may be alone or a combination of two or more.

The non-cobalt metallic soap contained in the curing accelerator of the present invention can be divided into two: a main non-cobalt metallic soap and an auxiliary non-cobalt metallic soap (an auxiliary dryer), in which the main non-cobalt metallic soap is preferably a manganese soap and/or an iron soap. For the auxiliary dryer, non-cobalt metallic soaps other than the manganese soap and the iron soap can be used.

Note that the "non-cobalt metallic soap" in the definitions of the amounts of the diamine compound, the amino alcohol compound, and the fatty acid described below refers to the main non-cobalt metallic soap that is the manganese soap and/or the iron soap.

When the auxiliary dryer is used, the amount of the auxiliary dryer is, for example, 100 to 2,000 parts by mass with respect to 100 parts by mass of the main non-cobalt metallic soap.

The amount of the auxiliary dryer is, for example, in a range of 1 to 60 moles and preferably in a range of 5 to 50 moles with respect to 1 mole of the metal atom in the main non-cobalt metallic soap.

The non-cobalt metallic soap can be produced by known methods, or commercially available products may be used.

### Diamine Compound

The diamine compound is a diamine compound having a structure in which at least one is a primary amine and two nitrogen atoms are coupled to each other via two carbon atoms and is preferably a diamine compound represented by General Formula (B) below: 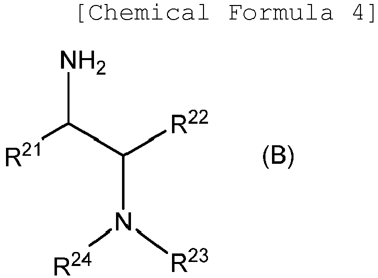 in General Formula (B),
R²¹ and R²² are each independently a C₁₋₉ alkyl group or an oxo group;
R²³ and R²⁴ are each independently a hydrogen atom, a C₁₋₉ alkyl group, or a phenyl group;
R²¹ and R²² may be bonded to each other to form an alicyclic structure or an aromatic ring structure;
R²¹ and R²⁴ may be bonded to each other to form a nitrogen-containing alicyclic structure or a nitrogen-containing aromatic ring structure;
R²² and R²³ may be bonded to each other to form a nitrogen-containing alicyclic structure or a nitrogen-containing aromatic ring structure; and
R²³ and R²⁴ may be bonded to each other to form a nitrogen-containing alicyclic structure or a nitrogen-containing aromatic ring structure.

The diamine compound contained in the curing accelerator of the present invention has a structure in which two nitrogen atoms, at least one of which is a primary amine, are coupled to each other via two carbon atoms. It is thought that having such a structure forms a metal complex with the non-cobalt metallic soap to give excellent drying performance to the metallic soap.

The C₁₋₉ alkyl group as R²¹, R²², R²³, and R²⁴ may be a straight-chain alkyl group, be a branched alkyl group, or contain an alicyclic structure.

The C₁₋₉ alkyl group of R²¹, R²², R²³, and R²⁴ is preferably a C₁₋₅ alkyl group.

Examples of the C₁₋₉ alkyl group as R²¹, R²², R²³, and R²⁴ include a methyl group, an ethyl group, a propyl group, an isopropyl group, a butyl group, a sec-butyl group, a tert-butyl group, an isobutyl group, a pentyl group, an isopentyl group, a tert-pentyl group, a hexyl group, a cyclohexyl group, a heptyl group, an isoheptyl group, and a tert-heptyl group.

At least either R²³ or R²⁴ is preferably a hydrogen atom, with both being more preferably hydrogen atoms.

The C₁₋₉ alkyl group as R²¹, R²², R²³, and R²⁴ may have a substituent, and examples of the substituent include a hydroxy group, an oxo group (=O), and a phenyl group.

The C₁₋₉ alkyl group as R²¹, R²², R²³, and R²⁴ may have one or more ether bonds (-O-) between carbons.

R²¹ and R²² may be bonded to each other to form an alicyclic structure or an aromatic ring structure.

Examples of the alicyclic structure include a cyclohexane ring, whereas examples of the aromatic ring structure include a benzene ring.

R²¹ and R²⁴ may be bonded to each other to form a nitrogen-containing alicyclic structure or a nitrogen-containing aromatic ring structure.

R²² and R²³ may be bonded to each other to form a nitrogen-containing alicyclic structure or a nitrogen-containing aromatic ring structure.

R²³ and R²⁴ may be bonded to each other to form a nitrogen-containing alicyclic structure or a nitrogen-containing aromatic ring structure.

Examples of the nitrogen-containing alicyclic structure include a pyrrolidine ring, a piperidine ring, and an azepane ring, whereas examples of the nitrogen-containing aromatic ring structure include a pyrrole ring and a pyridine ring.

Specific examples of the diamine compound include the following compound group, among which 1,2-cyclohexanediamine, 1,2-diaminopropane, and 2-picolylamine are preferred.

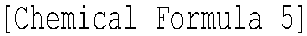

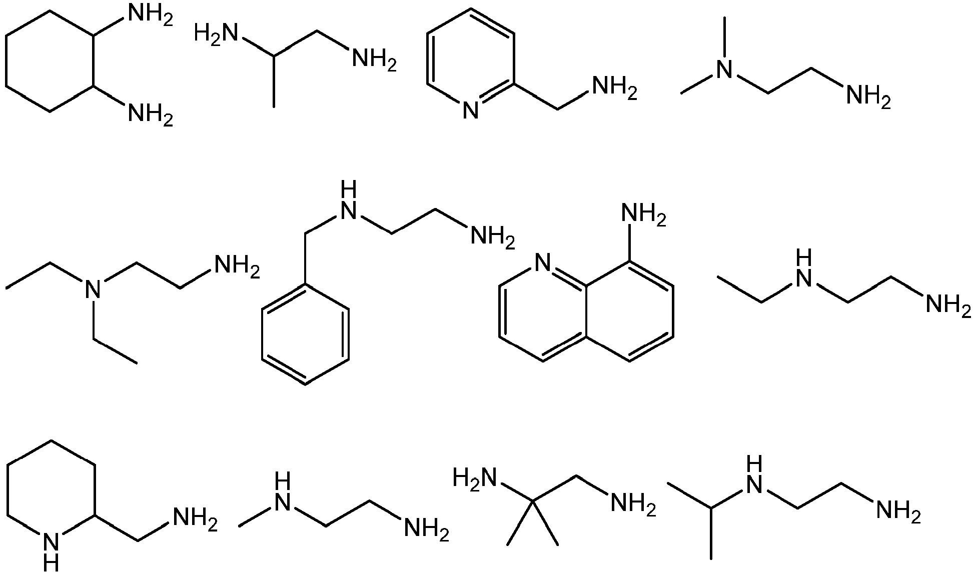

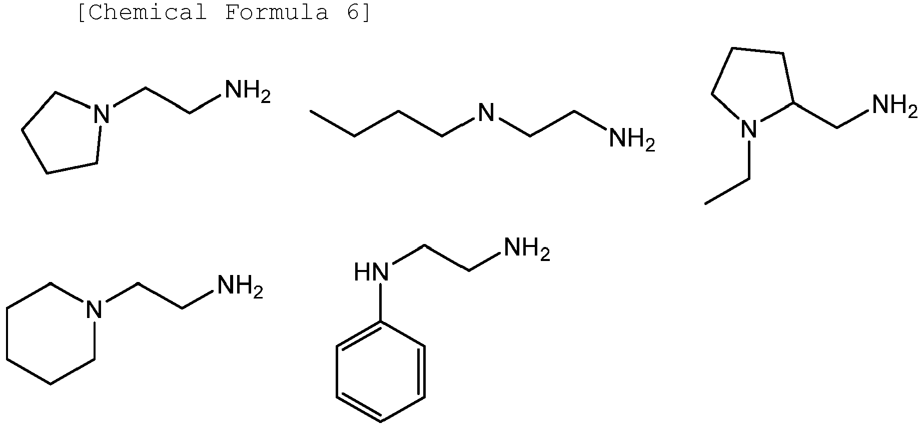

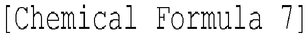

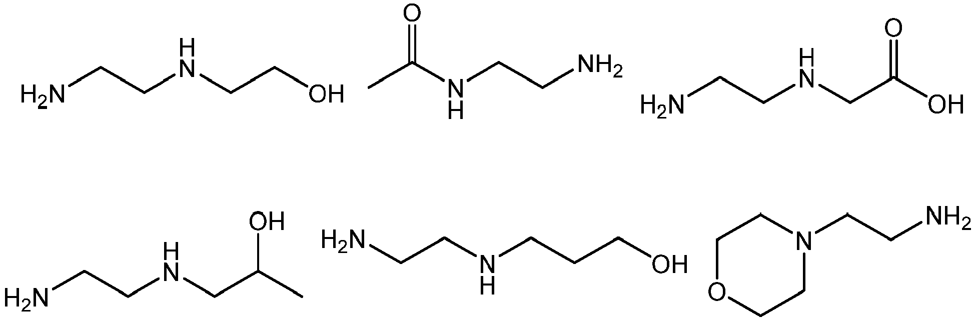

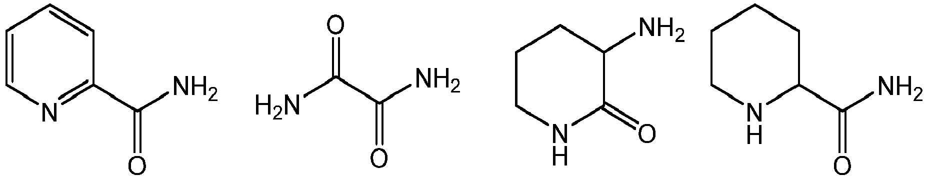

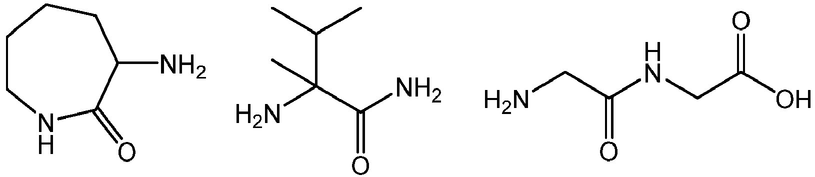

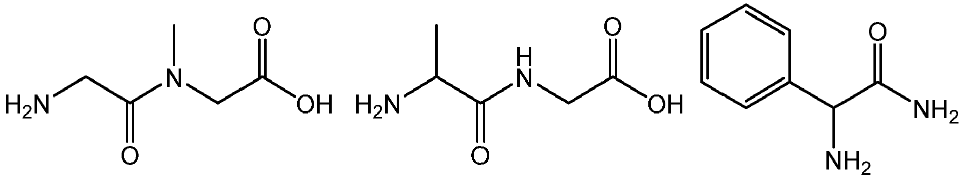

The diamine compound contained in the curing accelerators of the present invention may be alone or a combination of two or more.

The content of the diamine compound is, for example, in a range of 0.1 to 20 moles, preferably in a range of 0.2 to 10 moles, and more preferably in a range of 0.5 to 8 moles with respect to 1 mole of the metal atom in the non-cobalt metallic soap.

The diamine compound can be produced by known methods, or commercially available products may be used.

### Amino Alcohol Compound

The amino alcohol compound is a compound having a hydroxy group and an amino group in its alkane skeleton, and it is thought that the nitrogen atom in the amino alcohol coordinates with the non-cobalt metallic soap to give excellent drying performance and stability over time to the metallic soap.

The amino alcohol is preferably a compound represented by General Formula (C) below: 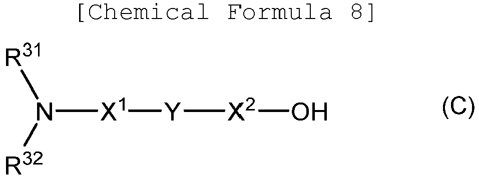 in General Formula (C) above,
R³¹ and R³² are each independently a hydrogen atom or a C₁₋₆ alkyl group;
X¹ and X² are each independently a C₁₋₆ alkylene group; and
Y is an ether bond or a linking group represented by - NR³³- (R³³ is a hydrogen atom or a C₁₋₆ alkyl group) .

The C₁₋₆ alkyl group as R³¹, R³² and R³³ may be a straight-chain alkyl group, be a branched alkyl group, or contain an alicyclic structure.

The C₁₋₆ alkylene group as X¹ and X² is preferably a C₂₋₃ alkylene group.

Specific examples of the amino alcohol compound include 2-[(2-dimethylaminoethyl)methylamino]ethanol, 2-(2-aminoethyl)aminoethanol, 1-(2-aminoethyl)amino-2-propanol, 2-(3-aminopropylamino)ethanol, and 2-(2-dimethylaminoethoxy)ethanol.

The amino alcohol compound contained in the curing accelerator of the present invention may be alone or a combination of two or more.

The content of the amino alcohol compound is, for example, in a range of 0.1 to 20 moles, preferably in a range of 0.2 to 15 moles, more preferably in a range of 0.5 to 12 moles, and even more preferably in a range of 0.5 to 10 moles with respect to 1 mole of the metal atom in the non-cobalt metallic soap.

The amino alcohol compound can be produced by known methods, or commercially available products may be used.

### Fatty Acid

It is thought that the curing accelerator of the present invention can enhance the solubility of the metal complex formed by the non-cobalt metallic soap by further containing the fatty acid in addition to the non-cobalt metallic soap, the diamine compound, and the amino alcohol compound.

The fatty acid is preferably a C₁₋₂₂ aliphatic carboxylic acid. Examples thereof include acetic acid, propionic acid, butanoic acid, pentanoic acid, acrylic acid, methacrylic acid, octyl acid (2-ethylhexanoic acid), neodecanoic acid, naphthenic acid, isononanoic acid, eleostearic acid, tall oil fatty acid, coconut oil fatty acid, soybean oil fatty acid, linseed oil fatty acid, safflower oil fatty acid, dehydrated castor oil fatty acid, tung oil fatty acid, lauric acid, myristic acid, palmitic acid, stearic acid, isostearic acid, and oleic acid.

Preferred examples of the fatty acid include octyl acid, isononanoic acid, neodecanoic acid, and naphthenic acid.

If the non-cobalt metallic soap contained in the curing accelerator is the fatty acid metal salt, the fatty acid may be the same as or different from the fatty acid forming the non-cobalt metallic soap.

The fatty acid contained in the curing accelerator of the present invention may be alone or a combination of two or more.

The content of the fatty acid is, for example, in a range of 0.1 to 10 moles and preferably in a range of 0.5 to 4 moles with respect to 1 mole of the metal atom in the non-cobalt metallic soap.

### Diluent

The curing accelerator of the present invention is usually used by diluting the non-cobalt metallic soap, the diamine compound, the amino alcohol compound, and the fatty acid with a diluent.

For the diluent, known ones can be used. Examples thereof include hydrocarbon-based solvents such as toluene, xylene, heptane, hexane, and mineral spirits; alcohol-based solvents such as methanol, ethanol, propanol, cyclohexanol, 1-methoxy-2-propanol, propylene glycol, 1,4-butylene glycol, 1,3-butylene glycol, glycerin, diethylene glycol, ethylene glycol, dipropylene glycol, 2-methyl-1,3-pentanediol, 3-methyl-1,5-pentanediol, and benzyl alcohol; ketone-based solvents such as methyl ethyl ketone, methyl isobutyl ketone, and cyclohexanone; ether-based solvents such as propyl ether, methyl cellosolve, cellosolve, butyl cellosolve, and methyl carbitol; fatty acid esters such as methyl caproate, methyl caprate, and methyl laurate; vegetable oils and fats such as soybean oil, linseed oil, rapeseed oil, and safflower oil.

The diluent contained in the curing accelerator of the present invention may be alone or a combination of two or more.

The content of the diluent may be set as appropriate, with (the total mass of the non-cobalt metallic soap, the diamine compound, the amino alcohol compound, and the fatty acid)/(the mass of the diluent) being, for example, in a range of 10/90 to 95/5, preferably in a range of 20/80 to 90/10, and more preferably in a range of 40/60 to 80/20. The proportion of the diluent to the entire curing accelerator is preferably in a range of 25 to 50% by mass.

The curing accelerator of the present invention is only required to contain the non-cobalt metallic soap, the diamine compound, the amino alcohol compound, the fatty acid, and optionally the diluent and may substantially contain these components. The term "substantially contain" means that the total proportion of the non-cobalt metallic soap, the diamine compound, the amino alcohol compound, the fatty acid, and the diluent of the curing accelerator of the present invention is 80% by mass or more, 90% by mass or more, or 95% by mass or more, for example.

The upper limit of the total mass of the non-cobalt metallic soap, the diamine compound, the amino alcohol compound, the fatty acid, and the diluent, which is not limited to a particular value, is 100% by mass, for example.

The curing accelerator of the present invention may contain other components to the extent that the effect of the present invention is not impaired.

### Curable Resin Composition

The curable resin composition of the present invention contains the curing accelerator of the present invention and an oxidative polymerization type unsaturated resin.

The oxidative polymerization type unsaturated resin may be any resin so long as it has unsaturated bonds in its molecular structure and in which the unsaturated bonds can be oxidatively polymerized through oxygen in the air.

The content ratio of the curing accelerator of the present invention in the curable resin composition of the present invention is 0.01 to 10 parts by mass, for example, and preferably 0.1 to 5 parts by mass with respect to 100 parts by mass of the oxidative polymerization type unsaturated resin.

Specific examples of the oxidative polymerization type unsaturated resin include, for printing inks, rosin-modified phenolic resins, unsaturated group-containing polyester resins, alkyd resins, petroleum resins, and polymerized oil and include, for paints, alkyd resins, unsaturated group-containing urethane resins, unsaturated group-containing epoxy resins, unsaturated group-containing polyester resins, and polymerized oil.

The oxidative polymerization type unsaturated resin contained in the curable resin composition of the present invention may be alone or a combination of two or more.

The curable resin composition of the present invention can be suitably used as printing inks or paints, and the oxidative polymerization type unsaturated resin and other components contained in the curable resin compositions of the present invention can be set as appropriate in accordance with its use.

The following describes a case in which the curable resin composition of the present invention is used as a printing ink and a case in which it is used as a paint.

### Printing Ink

When the curable resin composition of the present invention is used for printing ink uses, the printing ink contains pigments or dyes, gelling agents, surface modifiers, drying inhibitors, vegetable oils, various organic solvents, and the like in addition to the curing accelerator for an oxidative polymerization type unsaturated resin and the oxidative polymerization type unsaturated resin.

The blending ratio of each of these components and the types of blending ingredients are adjusted as appropriate in accordance with the method of printing. The curable resin composition of the present invention can be suitably used for printing inks of any method, such as planographic offset inks, planographic waterless inks, and letterpress inks.

The content of the curing accelerator of the present invention in the printing ink is preferably in a range of 0.001 to 5 parts by mass in 100 parts by mass of the printing ink because of being an ink with a short drying time and hard to cause skinning.

Examples of the pigment include organic pigments for printing inks appearing in "Yuki Ganryou Handobukku (written by Isao Hashimito, published by Color Office, first edited in 2006)". Usable examples thereof include soluble azo pigments, insoluble azo pigments, condensation azo pigments, metal phthalocyanine pigments, metal-free phthalocyanine pigments, quinacridone pigments, perylene pigments, perinone pigments, isoindolinone pigments, isoindoline pigments, dioxazine pigments, thioindigo pigments, anthraquinone-based pigments, quinophthalone pigments, metal complex pigments, diketopyrrolopyrrole pigments, carbon black pigments, and other polycyclic pigments.

Inorganic pigments can also be used as the pigment. Examples thereof include inorganic coloring pigments such as titanium oxide, graphite, and zinc oxide; inorganic extender pigments such as calcium carbonate powder, precipitable calcium carbonate, gypsum, clay (China Clay), silica powder, diatomaceous earth, talc, kaolin, alumina white, barium sulfate, aluminum stearate, magnesium carbonate, barite powder, and abrasive powder; silicone, and glass beads.

The pigment used may be alone or a combination of two or more.

The content of the pigment, which varies depending on the type of a target printing ink, is usually in a range of 5 to 55 parts by mass in 100 parts by mass of the printing ink.

The gelling agent is used for the purpose of adjusting viscoelasticity for the printing ink. Examples thereof include organoaluminum compounds, organotitanate compounds, organozinc compounds, and organocalcium compounds.

More specific examples of the organoaluminum compounds include aluminum alcoholates and aluminum chelate compounds, and specific examples of the aluminum chelate compounds include aluminum diisopropoxide monoethylacetoacetate, aluminum di-n-butoxide monomethylacetoacetate, aluminum din-butoxide monoethylacetoacetate, aluminum di-i-butoxide monomethylacetoacetate, aluminum di-sec-butoxide monoethylacetoacetate, aluminum tris(acetylacetonate), aluminum tris(ethyl acetoacetonate), aluminum monoacetylacetonate bis(ethyl acetoacetonate).

The gelling agent used may be alone or a combination of two or more.

The content of the gelling agent, which varies depending on the type of the target printing ink, is usually in a range of 0.1 to 5 parts by mass in 100 parts by mass of the printing ink.

The surface modifier is added for the purpose of improving the wear resistance, the anti-blocking property, the slipping property, the anti-scratch property, and the like of ink coatings. Examples thereof include natural waxes such as carnauba wax, Japan wax, lanolin, montan wax, paraffin wax, and microcrystalline wax; and synthetic waxes such as Fischer-Tropsch wax, polyethylene waxes, polypropylene waxes, polytetrafluoroethylene waxes, polyamide waxes, and silicone compounds.

The surface modifier used may be alone or a combination of two or more.

The content of the gelling agent, which varies depending on the type of the target printing ink, is usually in a range of 0.1 to 7 parts by mass in 100 parts by mass of the printing ink.

The drying inhibitor is added for the purpose of improving the storage stability of the printing ink and to inhibit skinning. Examples thereof include hydroquinone, methoquinone, tert-butylhydroquinone, and methylhydroquinone.

The drying inhibitor used may be alone or a combination of two or more.

The content of the drying inhibitor, which varies depending on the type of the target printing ink, is usually in a range of 0.01 to 5 parts by mass in 100 parts by mass of the printing ink.

Examples of the vegetable oil include vegetable oils such as linseed oil, tung oil, rice-bran oil, safflower oil, soybean oil, tall oil, rapeseed oil, palm oil, castor oil, and coconut oil and fat; reclaimed vegetable oils obtained by subjecting these vegetable oils after being used for food processing or the like to reclaiming processing; and vegetable oil fatty acid monoesters such as linseed oil fatty acid methyl ester, soybean oil fatty acid methyl ester, linseed oil fatty acid ethyl ester, soybean oil fatty acid ethyl ester, linseed oil fatty acid propyl ester, soybean oil fatty acid propyl ester, linseed oil fatty acid butyl ester, and soybean oil fatty acid butyl ester. Among these, preferred are vegetable oils having unsaturated bonds in their molecules, such as linseed oil, tung oil, and soybean oil because they are used for printing inks with excellent drying properties, and soybean oil and its reclaimed oil are more preferred because of their low environmental burden.

The vegetable oil used may be alone or a combination of two or more.

For the organic solvent, commercially available products can be used. Examples thereof include "No. 1 Spindle Oil", "No. 3 Solvent", "No. 4 Solvent", "No. 5 Solvent", "No. 6 Solvent", "Naphtesol H", and "Alkene 56NT" (all of the above are manufactured by Eneos Corporation); "Diadol 13" and "Diarene 168" (all of the above are manufactured by Mitsubishi Chemical Corporation); "F Oxocol" and "F Oxocol 180"; "AF Solvent No. 4", "AF Solvent No. 5", "AF Solvent No. 6", and "AF Solvent No. 7" manufactured by JX (all of the above are manufactured by Nissan Chemical Corporation); "Solvent H" and "N-Paraffin C14-C18" (all of the above are manufactured by Isu Chemical Co., Ltd.); "Super Sol LA35" and "Super Sol LA38" (all of the above are manufactured by Idemitsu Kosan Co., Ltd.); and "Exxsol D80", "Exxsol D110", "Exxsol D120", "Exxsol D130", "Exxsol D160", "Exxsol D100K", "Exxsol D120K", "Exxsol D130K", "Exxsol D280", "Exxsol D300", and "Exxsol D320" (all of the above are manufactured by ExxonMobil).

The organic solvent used may be alone or a combination of two or more.

The total content of the vegetable oil and the organic solvent, which varies depending on the type of the target printing ink, is usually in a range of 20 to 80 parts by mass in 100 parts by mass of the printing ink.

Examples of the method for producing the printing ink include a method of milling ingredients including the oxidative polymerization type unsaturated resin, the pigment, the vegetable oil, the organic solvent, and various additives with an ink mill such as a three-roll ink mill. When using a rosin-modified phenolic resin, which is particularly versatile as the oxidative polymerization type unsaturated resin, a method may be employed in which the rosin-modified phenolic resin, the vegetable oil, the organic solvent, the gelling agent, and the like are made into a varnish in advance, and blending ingredients including the obtained varnish, the pigment, the vegetable oil, the organic solvent, and various additives are milled with an ink mill such as a three-roll ink mill.

The curing accelerator of the present invention may be added during this milling or added after the milling. As the method of adding the curing accelerator of the present invention, a pre-blended mixture of the components forming the curing accelerator of the present invention may be added or the components forming the curing accelerator of the present invention may be added separately.

### Paint

When the curable resin composition of the present invention is used for paint uses, the paint contains pigments, pigment dispersants, drying inhibitors, surface adjustment agents, UV absorbers, defoaming agents, thickeners, anti-settling agents, vegetable oils, and various organic solvents in addition to the curing accelerator for an oxidative polymerization type unsaturated resin and the oxidative polymerization type unsaturated resin.

The types and blending proportions of these components are adjusted as appropriate depending on the use and desired performance of the paint.

The content of the curing accelerator of the present invention in the paint is preferably in a range of 0.001 to 5 parts by mass in 100 parts by mass of the paint because of being an ink with a short drying time and hard to cause skinning.

Examples of the oxidative polymerization type unsaturated resin when used for paint uses include, as described above, alkyd resins, unsaturated group-containing urethane resins, and unsaturated group-containing epoxy resins. The alkyd resin, which is particularly versatile among these, is a kind of polyester resin containing a polybasic acid compound, a polyhydric alcohol compound, and an oil fatty acid as main raw material components.

Examples of the polybasic acid compound mainly used include dibasic acids such as phthalic anhydride, isophthalic acid, terephthalic acid, tetrahydro phthalic anhydride, hexahydro phthalic anhydride, succinic acid, fumaric acid, adipic acid, sebacic acid, and maleic anhydride; and lower alkyl esters of these acids. As needed, trivalent or higher polybasic acids such as trimellitic anhydride, methylcyclohexene tricarboxylic acid, and pyromellitic anhydride; and sulfophthalic acid, sulfoisophthalic acid, and their ammonium salts, sodium salts, lower alkyl esters, and the like can be used.

In addition, as acid components other than the polybasic acid compound, monobasic acids such as benzoic acid, crotonic acid, and p-t-butylbenzoic acid can be used in combination for the purpose of molecular weight adjustment and the like.

Examples of the polyhydric alcohol compound include divalent alcohols such as ethylene glycol, diethylene glycol, propylene glycol, 1,4-butanediol, neopentyl glycol, 3-methylpentanediol, 1,4-hexanediol, and 1,6-hexanediol. As needed, trivalent or higher polyhydric alcohols such as glycerin, trimethylol ethane, trimethylol propane, and pentaerythritol; and polyhydric alcohols having a polyoxyethylene group can be used in combination.

Part of the acid component and the alcohol component described above can be replaced with dimethylolpropionic acid, oxypivalic acid, paraoxibenzoic acid, and the like; lower alkyl esters of these acids; or oxyacid components such as lactones such as ε-caprolactone.

Examples of the oil fatty acid include coconut oil fatty acid, soybean oil fatty acid, linseed oil fatty acid, safflower oil fatty acid, tall oil fatty acid, dehydrated castor oil fatty acid, and tung oil fatty acid.

Epoxy-modified alkyd resins using an epoxy compound as part of the raw material and vinyl-modified alkyd resins grafted with a vinyl monomer such as styrene or (meth)acrylate can also be used as the oxidative polymerization type unsaturated resin.

Using polyester resins with terephthalic acid reclaimed from polyethylene terephthalate recovered for resource recycling (PET bottles, for example), industrial waste polyethylene terephthalate, and waste produced on the production of polyester products made of polyethylene terephthalate, polybutylene terephthalate, and the like with terephthalic acid as a main raw material (films, fibers, automotive parts, electronic parts, and the like) as a main raw material (hereafter abbreviated as "reclaimed PES"), reclaimed PES-modified alkyd resins obtained by dissolving this reclaimed PES in a mixture of the alcohol component and the polybasic acid component described above, depolymerizing the reclaimed PES, and subjecting it to an esterification reaction can also be used as the oxidative polymerization type unsaturated resin.

Examples of the pigment include inorganic pigments such as titanium dioxide, iron oxide, cadmium sulfide, calcium carbonate, barium carbonate, barium sulfate, clay, talc, chrome yellow, and carbon black; and organic pigments such as azo-based, diazo-based, condensation azo-based, thioindigo-based, indanthrone-based, quinacridone-based, anthraquinone-based, benzimidazolone-based, perylene-based, perinone-based, phthalocyanine-based, halogenated phthalocyanine-based, anthrapyridine-based, and dioxazine-based ones.

The pigment used may be alone or a combination of two or more.

The content of the pigment, which varies depending on the use and desired performance of the paint, is usually in a range of 20 to 70 parts by mass in 100 parts by mass of the paint.

For the drying inhibitors, the vegetable oils, and the organic solvents used in the paint, the same ones as the drying inhibitors, the vegetable oils, and the organic solvents used in the printing ink described above, respectively, can be used, and for the contents thereof also, the same ranges can be employed.

Examples of the method for producing the paint include a method of mixing together blending ingredients including the oxidative polymerization type unsaturated resin, the pigment, the organic solvent, and various additives with various mixers such as a paint shaker.

The curing accelerator of the present invention may be added during this mixing or added after the mixing. As the method of adding the curing accelerator of the present invention, a pre-blended mixture of the components forming the curing accelerator of the present invention may be added or the components forming the curing accelerator of the present invention may be added separately.

The paint of the present invention is applied to an object to be coated, is dried, and is cured by normal methods, and a coating can be thereby obtained. Examples of a base onto which the paint of the present invention can be applied (the object to be coated) include steel. Examples of the drying condition (curing condition) after application include air drying.

The paint of the present invention can exhibit excellent curability even when the coating is made thick and is thus particularly useful as a paint for thick coating. Specifically, the coating thickness of a cured coating can be made in a range of 1 to 500 µm. Thus, the paint of the present invention is useful as paints for construction.

### [Examples]

The following describes the present invention specifically by means of examples and comparative examples.

The invention is not limited to the following examples.

### Preparation Examples 1 to 4 and Preparation Comparative Examples 1 to 5: Preparation of Curing Accelerators

The components listed in Table 1 were stirred and mixed together in the amounts listed in Table 1 at a temperature of 70°C for 30 minutes to prepare curing accelerators 1 to 4 and curing accelerators 1' to 5'.

**[Table 1]**

| | Preparati on Example 1 | Preparati on Example 2 | Preparati on Example 3 | Preparati on Example 4 | Preparati on Comparati ve Example 1 | Preparati on Comparati ve Example 2 | Preparati on Comparati ve Example 3 | Preparati on Comparati ve Example 4 | Preparati on Comparati ve Example 5 |
|---|---|---|---|---|---|---|---|---|---|
| | Curing accelerat or 1 | Curing accelerat or 2 | Curing accelerat or 3 | Curing accelerat or 4 | Curing accelerat or 1' | Curing accelerat or 2' | Curing accelerat or 3' | Curing accelerat or 4' | Curing accelerat or 5' |
| Manganese soap | 2.4 | 2.4 | 2.4 | 2.4 | 2.4 | 2.4 | 2.4 | 2.4 | 2.4 |
| Cyclohexanediamine | 1.7 | 1.7 | 1.7 | 1.7 | 1.7 | | 1.7 | | |
| 1,4-Diazabicyclo[2.2.2]oc tane | | | | | | | | 1.7 | |
| 2-Aminobenzamide | | | | | | | | | 2 |
| Amino alcohol | 4.0 | 4.0 | 4.0 | 4.0 | | 4.0 | 4.0 | 4.0 | 4.0 |
| Neodecanoic acid | 2.1 | 2.1 | 0.3 | 2.1 | | | | 2.1 | 2.1 |
| Benzyl alcohol | 2.6 | | | | 8.7 | 6.4 | 4.7 | 2.6 | 2.3 |
| 1-Methoxy-2-propanol | | 2.6 | | | | | | | |
| Propylene glycol | | | 4.4 | 2.6 | | | | | |

The figures in the table are in parts by mass.

The metallic soap and the amino alcohol used in the preparation of the curing accelerators of the preparation examples and the preparation comparative examples are as follows:
Manganese soap: manganese neodecanoate (manganese content: 6.84% by mass)
Amino alcohol: 2-[(2-dimethylaminoethyl)methylamino]ethanol

1,4-Diazabicyclo[2.2.2]octane and 2-aminobenzamide, which are the diamine compounds of the preparation comparative examples, are compounds having the following structures, respectively.

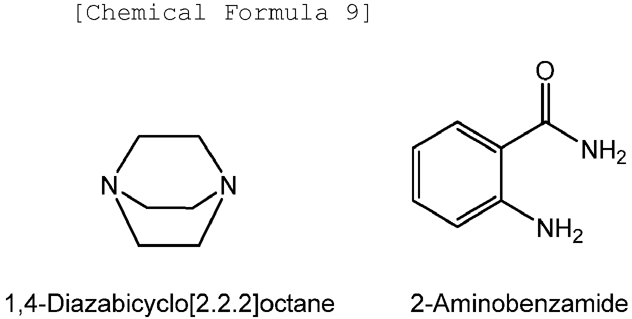

The cyclohexanediamine and the amino alcohol used in the preparation of the curing accelerators of the preparation examples and the preparation comparative examples are both commercially available products; the cyclohexanediamine is "1,2-cyclohexanediamine (a cis and trans-mixture)" manufactured by Tokyo Ohka Kogyo Co., Ltd., whereas the amino alcohol is "JEFFCAT Z-110" manufactured by Huntsman Corporation.

### Examples 1 to 4 and Comparative Examples 1 to 5: Preparation and Evaluation of Paints for Evaluation

Kneaded with a paint shaker using glass beads were 77.7 parts by mass of a titanium white pigment ("Ti-Pure R-960" manufactured by The Chemours Company), 33.3 parts by mass of calcium carbonate ("NS #200" manufactured by Nitto Funka Kogyo K.K.), 158.1 parts by mass of an alkyd resin having unsaturated fatty acid groups in the molecule ("Beckosol P-470-70" manufactured by DIC Corporation), 30.0 parts by mass of mineral spirits ("Oxasol LA" manufactured by Oxalis Chemicals Ltd), 0.3 part by mass of a thickener ("Benton 34" manufactured by Toshin Chemicals Co., Ltd.), and 0.6 part by mass of an anti-skinning agent ("Methyl ethyl ketoxime" manufactured by UBE Corporation) to obtain a base paint.

The curing accelerators listed in Table 2 were each added to the obtained paint to prepare paints for evaluation.

The metallic soaps used in the preparation of the paints for evaluation are as follows:
Calcium soap: a mixture of calcium neodecanoate and calcium 2-ethylhexanoate ("DICNATE Ca 5%" manufactured by DIC Corporation)
Zirconium soap: zirconium 2-ethylhexanoate ("12% Zr-DICNATE" manufactured by DIC Corporation)

The following evaluations were conducted using the obtained paints for evaluation. Table 2 lists the results. Initial Drying Test

The freshly obtained paints for evaluation were left at rest overnight at room temperature, and the paints for evaluation after being left at rest overnight were each applied to a glass substrate to form a coating with a wet coating thickness of 152 µm. After application, the coating was touched with a fingertip every 30 minutes to check a drying state. The time at which the paint for evaluation no longer stuck to the fingertip was evaluated as a drying time.

### Post-Storage Drying Test

The freshly obtained paints for evaluation were stored in a storage room at 50°C for two weeks. The drying time was evaluated using the paints for evaluation after storage by the same method as in the initial drying test.

Apart from the evaluation of the paints, the stability over time of the curing accelerators used in the preparation of the paints was also evaluated. Specifically, the curing accelerators immediately after preparation were stored in a storage room at room temperature for two weeks, and the properties of the curing accelerators after storage were visually evaluated by the following criteria.

Good: No crystals are observed in the curing accelerator.

Poor: Crystals are observed in the curing accelerator.

**[Table 2]**

| | | Exampl e 1 | Exampl e 2 | Exampl e 3 | Exampl e 4 | Comparati ve Example 1 | Comparati ve Example 2 | Comparati ve Example 3 | Comparati ve Example 4 | Comparati ve Example 5 |
|---|---|---|---|---|---|---|---|---|---|---|
| Paint compositi on [part(s) by mass] | Base paint for evaluatio n | 40 | 40 | 40 | 40 | 40 | 40 | 40 | 40 | 40 |
| | Curing accelerat or 1 | 0.229 | | | | | | | | |
| | Curing accelerat or 2 | | 0.229 | | | | | | | |
| | Curing | | | 0.229 | | | | | | |
| | accelerat or 3 | | | | | | | | | |
| | Curing accelerat or 4 | | | | 0.229 | | | | | |
| | Curing accelerat or 1' | | | | | 0.229 | | | | |
| | Curing accelerat or 2' | | | | | | 0.229 | | | |
| | Curing accelerat or 3' | | | | | | | 0.229 | | |
| | Curing accelerat | | | | | | | | 0.229 | |
| | or 4' | | | | | | | | | |
| | Curing accelerat or 5' | | | | | | | | | 0.229 |
| | Calcium soap | 0.590 | 0.590 | 0.590 | 0.590 | 0.590 | 0.590 | 0.590 | 0.590 | 0.590 |
| | Zirconium soap | 0.246 | 0.246 | 0.246 | 0.246 | 0.246 | 0.246 | 0.246 | 0.246 | 0.246 |
| Manganese amount in paint [% by mass] | | 0.02 | 0.02 | 0.02 | 0.02 | 0.02 | 0.02 | 0.02 | 0.02 | 0.02 |
| Drying evaluatio n | Initial drying time [h] | 3.5 | 3.5 | 3.5 | 3. 0 | 3.0 | 5.0 | 3.5 | 7.5 < | 7.5 < |
| | Post-storage drying | 5.0 | 5.0 | 5.5 | 5.5 | 7.5 < | 6.0 | 5.0 | 7.5 < | 7.5 < |
| | time [h] | | | | | | | | | |
| Properties of curing accelerator after storage | | Good | Good | Good | Good | Good | Good | Poor | Good | Good |

It can be seen from Table 1 and Table 2 that combining the specific diamine compound, the amino alcohol, and the fatty acid with each other provides excellent initial drying performance and post-storage drying performance and improves the stability over time of the curing accelerator itself. On the other hand, Comparative Examples 1 and 3, which did not contain at least either the fatty acid or the amino alcohol, exhibited poor drying performance stability and storability of the curing accelerator itself, whereas Comparative Examples 2, 4, and 5, which did not contain the specific diamine compound, resulted in poor initial drying performance.

Provided is a curing accelerator for an oxidative polymerization type unsaturated resin having excellent drying performance and stability over time.
A curing accelerator for an oxidative polymerization type unsaturated resin contains a non-cobalt metallic soap, a diamine compound, an amino alcohol compound, and a fatty acid. The diamine compound is a diamine compound having a structure in which at least one is a primary amine and two nitrogen atoms are coupled to each other via two carbon atoms.

## Claims

1. A curing accelerator for an oxidative polymerization type unsaturated resin, the curing accelerator comprising:
a non-cobalt metallic soap;
a diamine compound;
an amino alcohol compound; and
a fatty acid,
the diamine compound being a diamine compound having a structure in which at least one is a primary amine and two nitrogen atoms are coupled to each other via two carbon atoms.

2. The curing accelerator for an oxidative polymerization type unsaturated resin according to claim 1, wherein the diamine compound is a compound represented by General Formula (B) below: 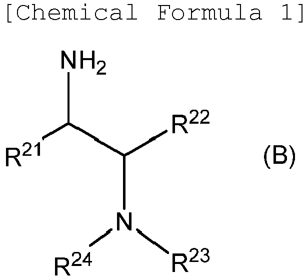 in General Formula (B),
R²¹ and R²² are each independently a C₁₋₉ alkyl group or an oxo group;
R²³ and R²⁴ are each independently a hydrogen atom, a C₁₋₉ alkyl group, or a phenyl group;
R²¹ and R²² are optionally bonded to each other to form an alicyclic structure or an aromatic ring structure;
R²¹ and R²⁴ are optionally bonded to each other to form a nitrogen-containing alicyclic structure or a nitrogen-containing aromatic ring structure;
R²² and R²³ are optionally bonded to each other to form a nitrogen-containing alicyclic structure or a nitrogen-containing aromatic ring structure; and
R²³ and R²⁴ are optionally bonded to each other to form a nitrogen-containing alicyclic structure or a nitrogen-containing aromatic ring structure.

3. The curing accelerator for an oxidative polymerization type unsaturated resin according to claim 1 or 2, wherein the diamine compound is one or more selected from 1,2-cyclohexanediamine, 1,2-diaminopropane, and 2-picolylamine.

4. The curing accelerator for an oxidative polymerization type unsaturated resin according to any of claims 1 to 3, wherein
the non-cobalt metallic soap is a fatty acid metal salt of a C₁₋₂₂ fatty acid, and
a metal of the fatty acid metal salt is manganese, iron, bismuth, zirconium, barium, calcium, strontium, nickel, copper, zinc, cerium, or vanadium.

5. The curing accelerator for an oxidative polymerization type unsaturated resin according to any of claims 1 to 4, wherein the non-cobalt metallic soap contains a manganese soap and/or an iron soap.

6. The curing accelerator for an oxidative polymerization type unsaturated resin according to any of claims 1 to 5, wherein the amino alcohol compound is a compound represented by General Formula (C) below: 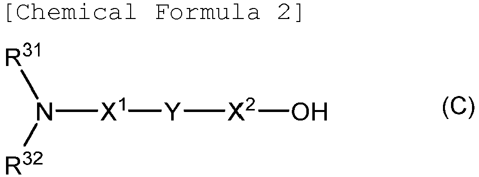 in General Formula (C) above,
R³¹ and R³² are each independently a hydrogen atom or a C₁₋₆ alkyl group;
X¹ and X² are each independently a C₁₋₆ alkylene group; and
Y is an ether bond or a linking group represented by - NR³³- (R³³ is a hydrogen atom or a C₁₋₆ alkyl group).

7. The curing accelerator for an oxidative polymerization type unsaturated resin according to any of claims 1 to 6, wherein the fatty acid is one or more selected from octyl acid, isononanoic acid, neodecanoic acid, and naphthenic acid.

8. A curable resin composition comprising:
the curing accelerator for an oxidative polymerization type unsaturated resin according to any of claims 1 to 7; and
an oxidative polymerization type unsaturated resin.

9. The curable resin composition according to claim 8, wherein the curable resin composition is a printing ink or a paint.
